# EUROPEAN PATENT SPECIFICATION

(11) **EP 0 527 030 B1**
(45) Date of publication and mention of the grant of the patent: **09.10.1996**
(21) Application number: 92307113.8
(22) Date of filing: 04.08.1992
(51) Int. Cl.: G01V 1/40, G01V 1/20

(54) **Method of vertical seismic profiling**
Verfahren vertikaler seismischer Messung
Méthode de mesure séismique en profil verticale

(30) Priority: 05.08.1991 US 739951
(43) Date of publication of application: 10.02.1993
(73) Proprietor: EXXON PRODUCTION RESEARCH COMPANY, Houston, Texas 77252 (US)
(72) Inventor: Rice, James Allen, Houston, Texas (US)
(74) Representative: Somers, Harold Arnold

(56) References cited:
- GB-A- 1 204 364
- US-A- 3 893 539

## Description

This invention relates to a method for vertical seismic profile surveys (VSP's).

A vertical seismic profile (VSP) is a seismic data gathering activity in which either the seismic receivers or the seismic sources are positioned at various depths in a drilled well. VSP surveys are closely related to horizontal seismic surveys. Both involve the propagation of seismic energy, from seismic sources, through the earth, to seismic receivers. The arrival times and character of the seismic waves are recorded. This data is typically further processed to eliminate or minimize spurious signals, and the resulting record provides significant information about the section of the earth through which the seismic energy passed.

The geometry of the VSP presents particular problems, however, which are not encountered in horizontal seismic surveys. In a horizontal survey, the positions available for placement of seismic sources and receivers are virtually unlimited. In a VSP, one leg of the survey is fixed, and is limited to the location of the wellbore. Depth positions are limited to depths approximately between the surface intercept of the wellbore and the well's total depth. This limitation presents a problem of diminishing fold across the reflectors surveyed.

In both horizontal and VSP surveys, the record of signals received by a receiver or single group of receivers is called a trace. During the processing stage, traces are stacked to eliminate spurious signals and the stacked traces represent a reflection from a common depth point (CDP) or point of reflection on the reflector surveyed. The number of traces stacked, which depends upon the number of source-receiver pairs which have received data reflected from a common depth point, is the fold.

Because of the limited geometry of the VSP, not all common depth points on a reflector will have the same fold, or number of traces stacked to represent them. Conventional practice positions sources and receivers at equally spaced locations along the surface and in the wellbore. Typical spacing between sources or receivers in the borehole is 10 to 25 meters, and typical spacing along the surface of the earth is hundreds of meters. With this equally spaced positioning, CDP fold for a reflector surveyed falls rapidly as the CDP point moves radially away from the borehole. This results in VSP data which has poorer resolution and a higher noise to signal ratio away from the wellbore. VSP data with fold fall-off is also poorly comparable with horizontal sections with which one may wish to "tie" the VSP survey.

Efforts to eliminate the reflection signal's amplitude degradation with increasing distance from the borehole due to CDP fold fall off problem in VSP's have centered on the processing phase of seismic exploration. Data is collected in a traditional manner, and then processed to compensate, somewhat, for a lack of fold. Most commonly, a technique known as amplitude gaining is employed to enhance data received from areas of the reflectors with fewer fold. This technique is not totally satisfactory because it destroys the true amplitude of the traces. True amplitude is useful both in making an accurate tie with horizontal surveys and in newer exploration techniques, such as direct hydrocarbon imaging (DHI). DHI requires retention of true amplitudes in a final record, as these amplitudes may be indicative of the fluid type (i.e. hydrocarbon) in the rock.

GB-A-1204364 discloses a method for attenuating horizontally travelling noise by combining an array of transducers, either sources or detectors, into a single unit having an improved wavenumber response. The individual elements of the transducer array are spaced apart along a substantially straight line at intervals that are in relative proportion to each other as the intervals between the centroids of the same number of equal areas under a truncated sinc function based on the ideal wavenumber response for the array. The array functions as a unit to provide either a single source or a single detector.

US-A-3,893,539 discloses an underwater seismic source for generating an improved seismic signal. The source uses a spaced array of air guns of different sizes to generate a seismic signal having an initial bubble impulse and to suppress the cumulative effects of secondary bubble impulses. The sizes, minimum spacings, and secondary bubble suppression techniques are combined to provide an underwater seismic source having an acoustic pressure signature wherein the amplitude of the initial impulse is from eight to twelve times the amplitude of any subsequent bubble impulses. To accomplish this, the individual sources are spaced apart from one another at increasingly greater distances sufficient to prevent coalescence of adjacent bubbles. All of the air guns are activated simultaneously to produce a single seismic signal.

According to the present invention, there is provided a method of vertical seismic profiling of an earth formation including a plurality of seismic reflectors, wherein a plurality of seismic signals are sent into the earth formation towards the reflectors (14:114) from a plurality of seismic sources (30:130), and wherein said plurality of seismic signals are reflected by said reflectors (14:114) to form a plurality of reflected seismic signals which are received at a plurality of seismic receivers (2:102) and recorded, said receivers being positioned along or near the surface of the earth (32:132) while said seismic sources are positioned in a wellbore (4:104), or vice versa, and wherein each plurality of sources, signals and receivers can be the same or different;

the method being characterized in that said sources and/or receivers are positioned so that a first distance (134:34) between a pair of adjacent seismic receivers (136:138) or sources (36:38) positioned along or near the surface of the earth (132:32) decreases exponentially as a second distance (120:20) from the closer (136:36) of the pair of adjacent seismic receivers (136:138) or sources (36:38) to the surface intercept (112:12) of the wellbore (104:4) increases, and/or a first distance (106:6) between a pair of adjacent sources (110:116) or receivers (10:16) positioned in the wellbore (104:4) increases exponentially as a second distance (108:8) from the closer (110:10) of the pair of adjacent seismic sources (110) or receivers (10) to the surface intercept (112:12) of the wellbore increases.

The invention will be better understood by referring, by way of example, to the accompanying drawings, in which :-

FIGURE 1 illustrates pictorially the basic components of a vertical seismic profile, including sources and receivers.

FIGURE 2 illustrates pictorially the basic components of a reverse vertical seismic profile.

FIGURE 3 illustrates graphically a division of the available points in the surface offset (r) and depth (z) plane into CDP bins. The borders of this figure represent constraints imposed by reflection imaging.

FIGURE 4 (Prior Art) This figure graphically illustrates the distribution of CDP stacking fold or a range of CDP offset radii, r_{CDP}, for an example in which the target reflector is located at a depth of 3,050 meters. Line 401 illustrates the distribution of fold for conventional VSP shooting, with equally-spaced source and receiver positions.

FIGURE 5 graphically illustrates the distribution of CDP stacking fold for a range of CDP offset radii, r_{CDP}, for an example in which the target reflector is located at the same depth as in Figure 4. Line 501 illustrates the improvement achieved spacing the sources and receivers as disclosed hereinbelow.

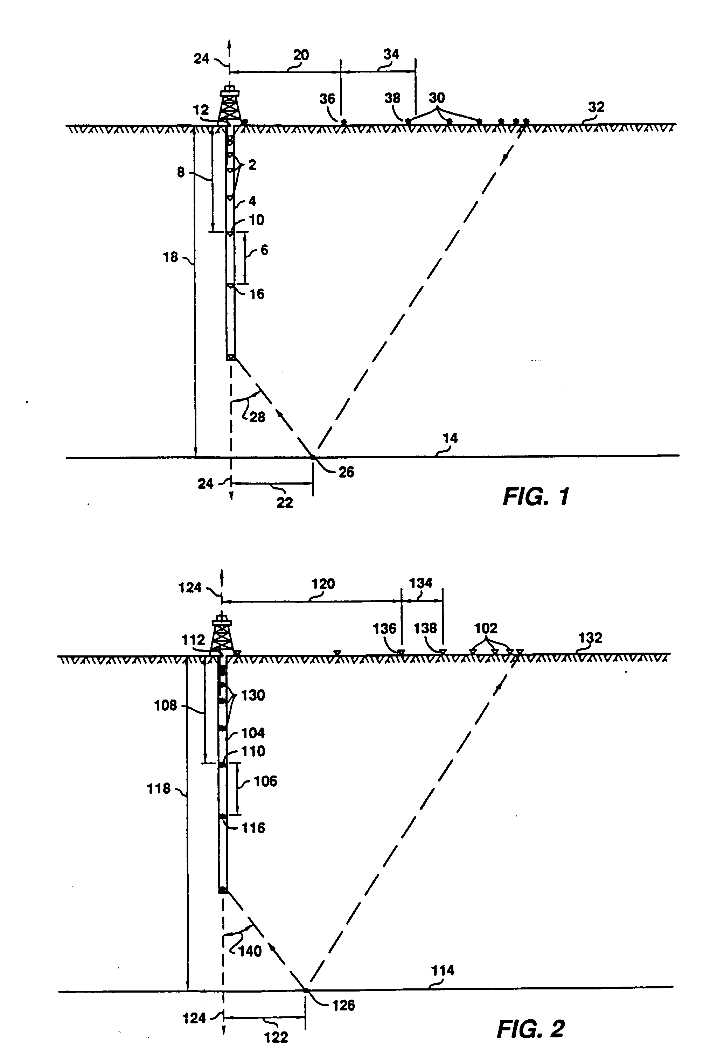

Referring to FIGURE 1, a system for sending and receiving seismic signals comprises a plurality of seismic sources positioned at or near the surface of the earth, and a plurality of seismic receivers positioned, as indicated at 2 in FIGURE 1, in a wellbore, as indicated at 4. The distance between a pair of adjacent seismic receivers, Δz, as indicated at 6 in FIGURE 1, increases exponentially as a second distance, (z), as indicated at 8 in FIGURE 1, measured from the closer of the pair of adjacent seismic receivers, indicated at 10 in FIGURE 1, to the surface intercept of the wellbore, indicated at 12 in FIGURE 1, increases. Thus, in contrast to conventional VSP shooting, where seismic receiver positions are located at equally-spaced intervals, the seismic receivers in this system are positioned increasingly further apart as one goes further from the surface intercept of the wellbore. The sources in this system may be positioned at any locations at or near the surface of the earth.

In a preferred embodiment of this invention, a distribution of CDP fold recorded by this system is substantially equalized, or flattened, across a reflector surveyed, indicated at **14** in FIGURE 1.

In a more preferred embodiment of this invention, a plurality of seismic receivers, indicated at **2** in FIGURE 1, are positioned such that Equation I is satisfied:${\text{(I) Δz = (e}}^{\text{βz}} \text{) (z')}$ A first distance, Δz, indicated at **6** on FIGURE 1, is measured between a pair of adjacent seismic receivers, indicated by **10** and (16) in FIGURE 1. A second distance, z, as indicated at **8** in FIGURE 1, is less than or equal to the total depth of the wellbore and is measured from the closer of the pair of adjacent seismic receivers, indicated at **10** in FIGURE 1, to the surface intercept of the wellbore, indicated at **12** in FIGURE 1. β is a constant, and e is the exponential constant, being approximately equal to 2.718. The variable is an initial depth spacing interval based on aliasing considerations. To prevent data from having uncertain phase associated with sampling less densely than the Fourier criterion of at least 2 sample locations per wavelength, the standard procedure is to: (1) Determine the mimimum speed of sound among the geologic layers for P-waves, S-waves, and Stonely or "tube" waves in a borehole (or Rayleigh waves, also known as "ground roll", on the surface); (2) Determine the maximum frequency of seismic signals useful for reflection imaging, apply analog filters during field operations to remove the higher frequencies, and then (3) Set the spatial sampling density, in this case z', equal to the minimum velocity divided by twice the maximum frequency.

In a more preferred embodiment of this invention, the constant β in Equation I is calculated by using linear regression to determine the slope of a plot of z versus logₑA(z), where A(z) is determined by solving Equation II:${\text{(II) A(z) = 2DΔc -½(Δc)}}^{\text{2}} \text{-rΔc} \frac{\text{D-z}}{\text{2D-z}} {\text{+ DΔc log}}_{\text{e}} \frac{\text{[(2D-z)D]}}{\text{[(D-z)r + (2D-z)Δc]}} \text{+ rD} \frac{\text{D-z}}{\text{2D-z}} {\text{log}}_{\text{e}} \frac{\text{[r(D-z)r]}}{\text{[r(D-z)r + (2D-z)Δc]}}$ for a series of values of z=(z')(n). The variable z' is the initial depth interval used in Equation I and n is an integer. Of necessity, z is less than or equal to the depth of the wellbore. The variable r is set equal to r', where r is an initial surface offset interval also based on aliasing considerations. D, indicated at 18 FIGURE 1, is the depth to a reflector being imaged, and Wc is a CDP increment, which may be chosen to be r' or r'/2.

In a most preferred embodiment of this invention, the seismic sources are positioned at a plurality of distances, r, indicated by **20** in FIGURE 1, and the seismic receivers are positioned at a plurality of depths, z, indicated at **8** in FIGURE 1, such that the plurality of distances, r, and the plurality of depths, z, which are available for mapping a reflector at depth, D, are grouped into CDP radial offset bins. CDP radial offset bins are sets of data that represent a common depth point on a reflector being mapped. In the most preferred embodiment of this invention, the plurality of distances, r, and the plurality of depths, z, are grouped into CDP radial offset bins according to the Equation III:${\text{(III) r}}_{\text{CDP}} \text{=} \frac{\text{(D-z)r}}{\text{2D-z}}$ In this equation, r_{CDP}, indicated at **22** in FIGURE 1, is a distance measured radially from an axis running vertically through the wellbore, indicated by **24** in FIGURE 1, to a common depth point, indicated at **26** in FIGURE 1, on the reflector being mapped, indicated at **14** in FIGURE 1. The variable r is measured from the surface intercept of the wellbore, indicated at **12**, to the position of a seismic source at or near the surface of the earth. The depth z is measured from the surface intercept of the wellbore to the position in the wellbore of a seismic receiver. Of necessity, in shooting reflection seismic, the variety of depths, z, and the variety of surface offsets, r, which may be employed are limited by the constraint that an angle ϑ, indicated at **28** on FIGURE 1, must be ≤45°. The depth, z, must be less than or equal to the reflector depth D, and the surface offset, r, will be less than or equal to twice the reflector depth, D. D is measured from the surface of the earth, along a perpendicular to said surface, to the reflector, indicated at **14** in Figure 1.

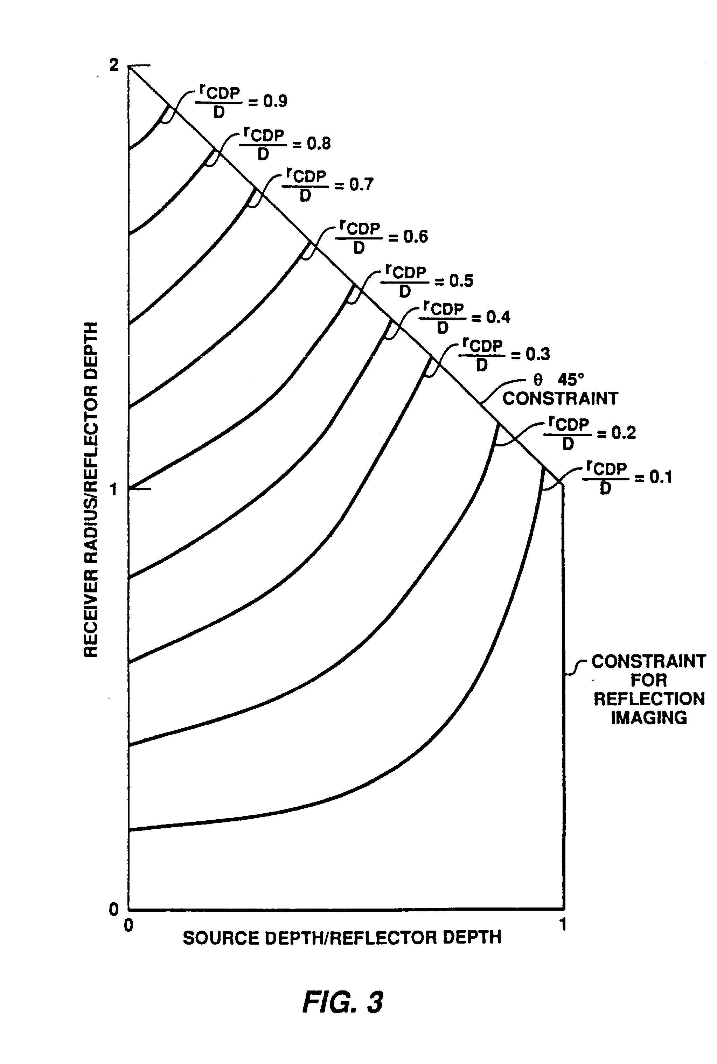

FIGURE 3 illustrates the division of available surface offset and depth positions into CDP bins. The example in FIGURE 3 illustrates the situation where a reflector being surveyed lies at a depth of 3048 meters in a constant velocity material, with a velocity of 2438 meters per second. The borders of the diagram represent the constraints just discussed. Embodiments noted as most preferred provided the best flattening of CDP fold in experimental tests.

Another embodiment of the invention provides a system for sending and receiving seismic signals comprising a plurality of seismic receivers positioned in a wellbore, and a plurality of seismic sources, indicated at **30** in FIGURE 1, placed along or near the surface of the earth, indicated at **32** in FIGURE 1. In this system a first distance, Δr, indicated by **34** in FIGURE 1, between a pair of adjacent seismic source positions, indicated at **36** and **38** in FIGURE 1, decreases exponentially as a second distance, r, indicated at **20** in FIGURE 1, measured from the closer of the pair of adjacent seismic sources, indicated at **36** in FIGURE 1, to the surface intercept of the wellbore increases. Thus, in contrast to conventional VSP shooting, where source positions are located at equally-spaced intervals, the sources in this system are positioned increasingly closer together as one goes further from the surface intercept of the wellbore. The receivers in this system may be positioned at any locations in the wellbore.

In a preferred embodiment of this invention, seismic sources in this system are positioned such that a distribution of CDP fold recorded by the system is substantially equalized across a reflector surveyed.

A more preferred embodiment of the invention provides that the plurality of seismic sources, indicated at **3**0 in FIGURE 1, are positioned such that Equation IV is satisfied:${\text{(IV) Δr = (r') (e}}^{\text{-αr}} \text{)}$ In this equation, Δr is a first distance, indicated at **34** in FIGURE 1, measured between a pair of adjacent seismic source positions, r is a second distance, indicated **20** in FIGURE 1, measured from the closer of the pair of adjacent seismic source positions to the surface intercept of wellbore, indicated at **12** in FIGURE 1, and r' is an initial surface spacing interval based on aliasing considerations known in the art. The variable r' must be less than or equal to 2D, (α) is a constant, and e is a constant approximately equal to 2.718.

In a more preferred embodiment of the invention, α is calculated by using linear regression to determine the slope of a plot of r versus logₑA(r), where A(r) is determined by solving Equation V for values of r:${\text{(V) A(r) = 2DΔc -½(Δc)}}^{\text{2}} \frac{\text{D-z}}{\text{2D-z}} {\text{+ DΔc log}}_{\text{e}} \frac{\text{[D(2D-z)]}}{\text{[r(D-z)r + Δc(2D-z)]}} \text{+ rD} \frac{\text{D-z}}{\text{2D-z}} {\text{log}}_{\text{e}} \frac{\text{[r(D-z)]}}{\text{[r(D-z) + Δc(2D-z)]}}$ The depth of the seismic receivers, z, as indicated at **8** in FIGURE 1, is held equal to zero, and the equation is solved for a series of values for r equal to n(r'), where n is an integer, and r' is the initial surface spacing interval used in Equation IV. D is a depth to a reflector, indicated by **18** in FIGURE 1, and Δc is a CDP increment, chosen to be either r' or r'/2.

Another embodiment of the invention provides a system for sending and receiving seismic signals comprising seismic sources positioned in a wellbore and seismic receivers, indicated at **102** in FIGURE 2, positioned along or near the surface of the earth, indicated at **132** in FIGURE 2. A first distance, Δr, indicated at **134** in FIGURE 2, measured between a pair of adjacent seismic receivers, indicated at **136** and **138** in FIGURE 2, decreases exponentially as a second distance, r, indicated at **120** in FIGURE 2, from the closer of the pair of adjacent seismic receivers, indicated at **136** in FIGURE 2, to the surface intercept of the wellbore, indicated at **112** in FIGURE 2, increases.

In a more preferred embodiment of the invention, the seismic receivers are positioned such that a distribution of CDP fold recorded by the system is substantially equalized across a reflector surveyed. An example of a reflector surveyed is indicated by **114** in FIGURE 2. Preferably the seismic receivers are positioned such that Equation IV is satisfied. Even more preferably α is calculated by using linear regression to determine the slope of a plot of r versus logₑA(r), where A(r) is determined by solving Equation V for values of r equal to n(r').

A most preferred embodiment of the invention provides that the seismic sources are positioned at a plurality of depths, z, indicated **108** in FIGURE 2, and the seismic receivers are positioned at a plurality of distances, r, indicated at **120** in FIGURE 2, such that the plurality of depths, z, and the plurality of distances, r, which are available for mapping a reflector at a depth, D, are grouped into CDP radial offset bins according to Equation III. CDP radial offset bins are sets of data that are treated as representing a common depth point on the reflector being mapped. In this instance r_{CDP} is a distance, indicated at **122** in FIGURE 2, measured radially from an axis running vertically through the wellbore, indicated at **124** in FIGURE 2, to a common depth point, indicated at **126** in FIGURE 2, on a reflector being mapped, indicated at **114** on FIGURE 2. The distance r is measured from the surface intercept of the wellbore, indicated at **112**, to the position of a seismic receiver at or near the surface of the earth. The depth z is measured from the surface intercept of the wellbore to the position in the wellbore of a seismic source.

Another preferred embodiment of the invention provides a system for sending and receiving seismic signals comprising a plurality of seismic receivers positioned at or near the surface of the earth and a plurality of seismic sources, indicated at **130** in FIGURE 2, are positioned in a wellbore, indicated at **104** in FIGURE 2. A first distance, Δz, indicated at **106** in FIGURE 2, between a pair of adjacent seismic source positions increases exponentially as a second distance, z, indicated at **108** in FIGURE 2, measured from the closer of the pair of adjacent seismic source positions, indicated at **110** in FIGURE 2, to the surface intercept of the wellbore, indicated at **112** in FIGURE 2, increases.

In a preferred embodiment of the invention, sources are positioned such that a distribution of CDP fold recorded by the system is substantially equalized across a reflector surveyed.

A more preferred embodiment of the invention provides that the seismic sources indicated at **130** in FIGURE 2, are positioned such that Equation I is satisfied. In this instance, Δz, indicated at **106** in FIGURE 2, is a first distance, measured between a pair of adjacent seismic sources, indicated at **110** and **116** in FIGURE 2. The depth z, indicated at **108** in FIGURE 2, is a second distance, less than or equal to the total depth of the wellbore and measured from the closer of the pair of adjacent seismic receivers, indicated at **110** in FIGURE 2, to the surface intercept of the wellbore, β is a constant, z' is an initial depth data spacing interval based on aliasing considerations known in the art, and e is a constant approximately equal to 2.718.

In a more preferred embodiment of this invention, the constant β in the above equation is calculated by using linear regression to determine the slope of a plot of z versus logₑA(z), where A(z) is determined by solving Equation II for a series of values of z less than or equal to the depth of the wellbore, where z=(z')(n). The variable z' is the initial depth interval used in Equation I, and n is an integer. In solving this equation, r is held equal to r', an initial surface offset interval based on aliasing consideration, D, indicated at **118** FIGURE 2, is a depth to a reflector, and Δc is a CDP increment, which may be chosen to be r' or r'/2.

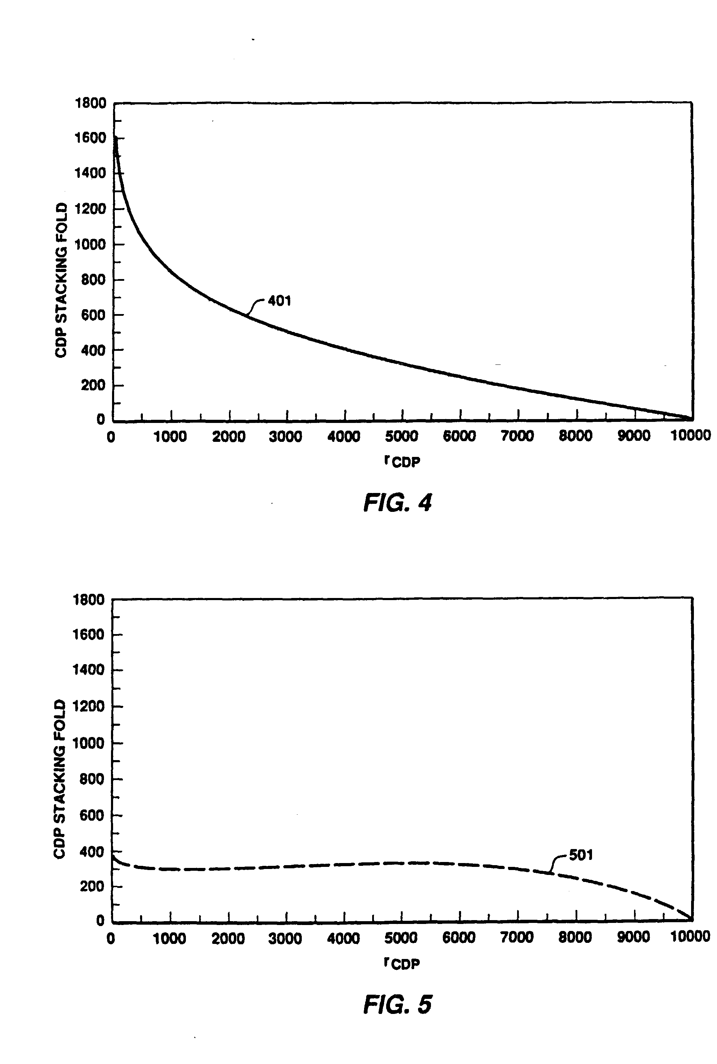

FIGURES 1 and 2 illustrate positions of both sources and receivers that are positioned according to this invention. Positioning of sources and positioning of receivers may be practiced independently, however, and should result in data of more even fold than conventional spacing. FIGURE 5 illustrates results for a 3048 meter reflector, imaged through rock of a constant velocity, positioning both seismic sources and receivers as taught by the invention. Figure 4 illustrates results obtained for the same conditions using conventional positioning. Curve **401** illustrates the extreme drop off of CDP stacking fold under conventional VSP spacing, and curve **501** in Figure 5 illustrates the results achieved through use of this system.

The computer program contained in Table I, written in FORTRAN, illustrates one preferred embodiment of the invention.

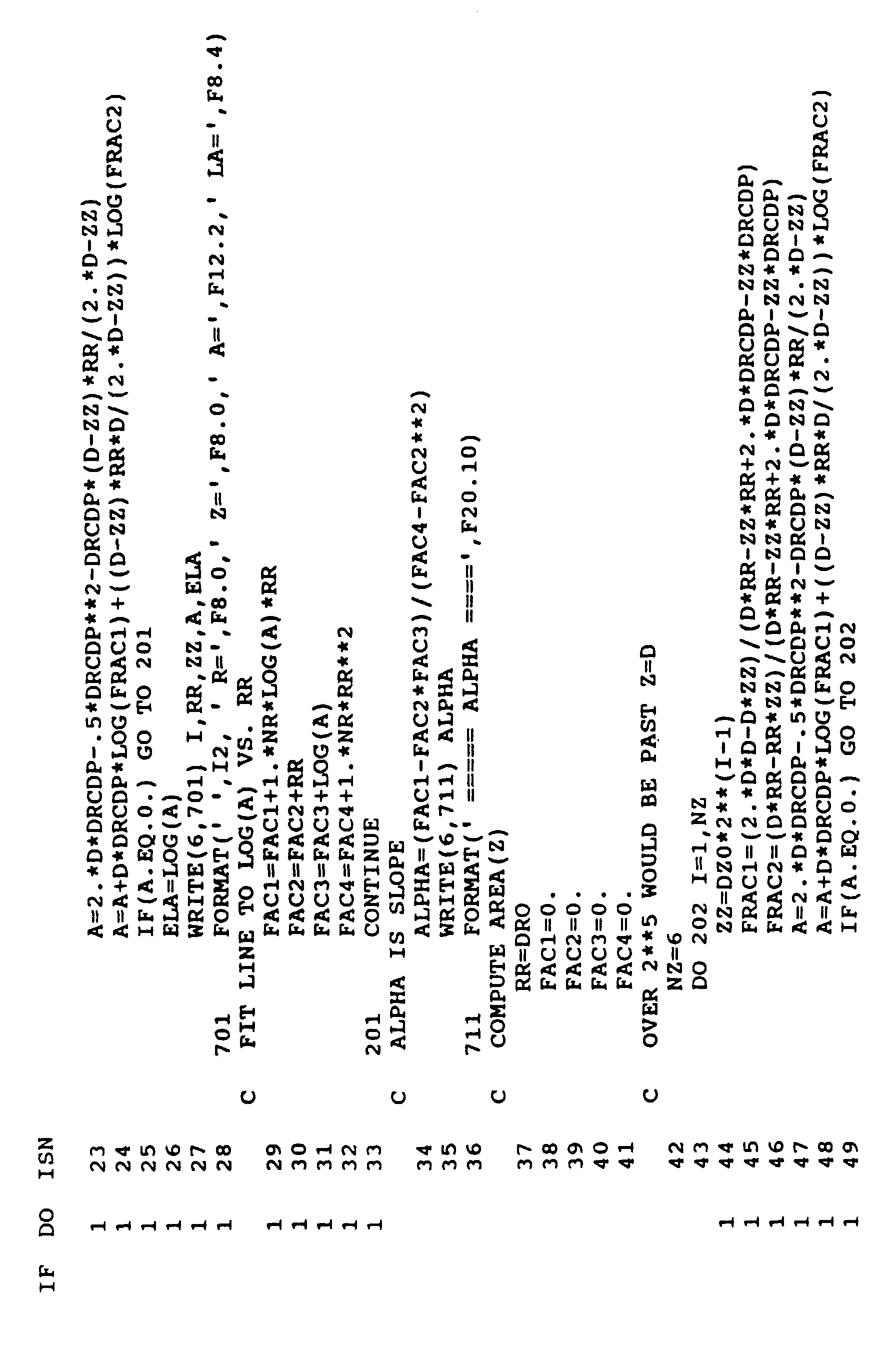

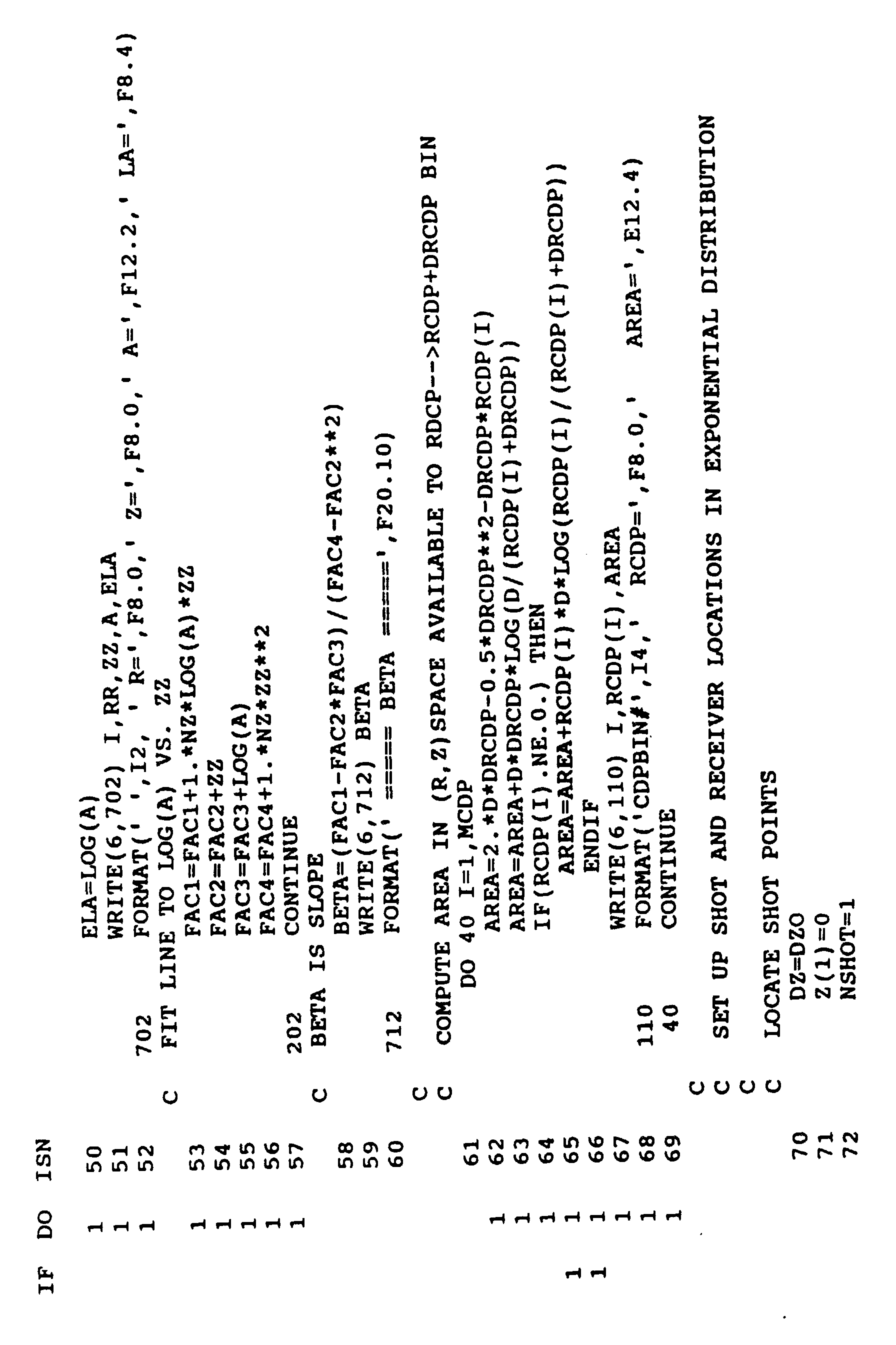

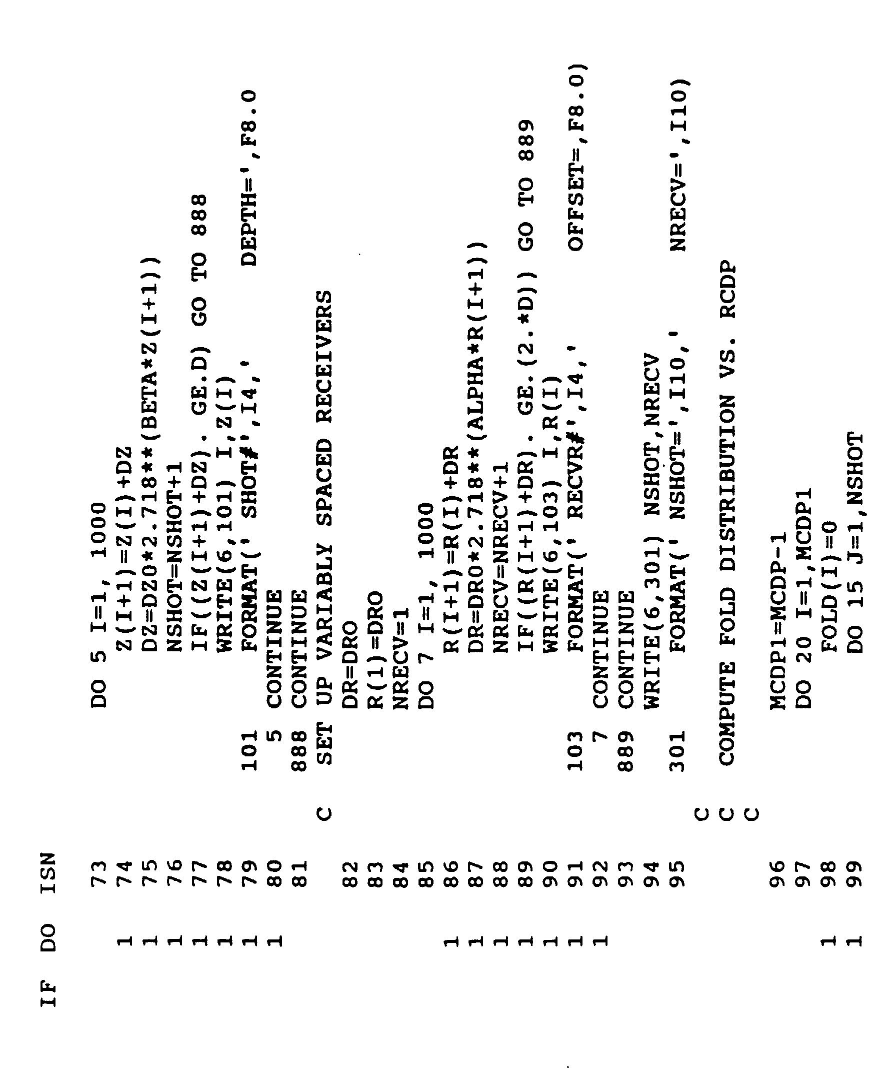

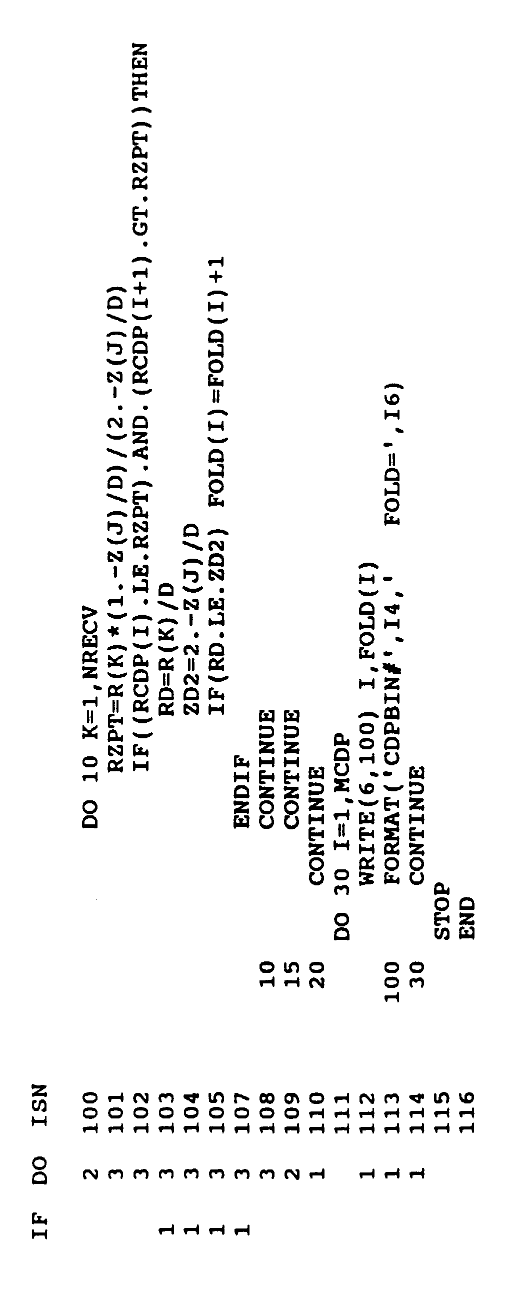

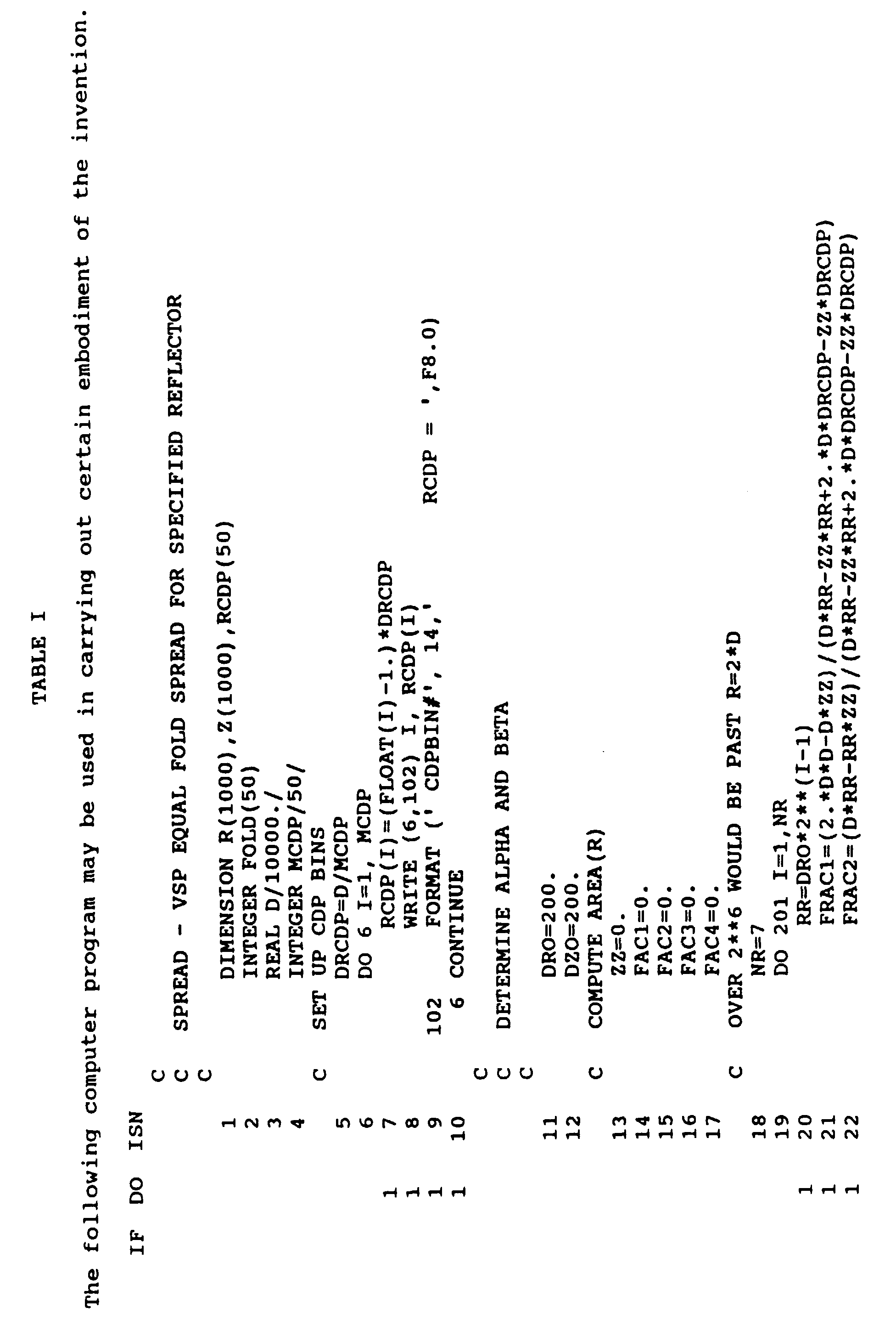

## Claims

1. A method of vertical seismic profiling of an earth formation including a plurality of seismic reflectors, wherein a plurality of seismic signals are sent into the earth formation towards the reflectors (14:114) from a plurality of seismic sources (30:130), and wherein said plurality of seismic signals are reflected by said reflectors (14:114) to form a plurality of reflected seismic signals which are received at a plurality of seismic receivers (2:102) and recorded, said receivers being positioned along or near the surface of the earth (32:132) while said seismic sources are positioned in a wellbore (4:104), or vice versa, and wherein each plurality of sources, signals and receivers can be the same or different;
the method being characterized in that said sources and/or receivers are positioned so that a first distance (134:34) between a pair of adjacent seismic receivers (136:138) or sources (36:38) positioned along or near the surface of the earth (132:32) decreases exponentially as a second distance (120:20) from the closer (136:36) of the pair of adjacent seismic receivers (136:138) or sources (36:38) to the surface intercept (112:12) of the wellbore (104:4), increases and/or a first distance (106:6) between a pair of adjacent sources (110:116) or receivers (10:16) positioned in the wellbore (104:4) increases exponentially as a second distance (108:8) from the closer (110:10) of the pair of adjacent seismic sources (110) or receivers (10) to the surface intercept (112:12) of the wellbore increases.

2. A method according to claim 1, wherein the seismic sources (30) are positioned along or near the surface of the earth (32) and each pair of adjacent seismic receivers (36,38) have said exponentially increasing first distance between them, and wherein the plurality of reflected seismic signals are received at a plurality of seismic receiver positions such that a distribution of CDP fold recorded by the system is substantially equalized across a reflector (14) surveyed.

3. A method according to claim 2, wherein:
the plurality of seismic receivers (2) are positioned such that equation:${\text{Δz = (e}}^{\text{βz}} \text{) (z')}$ is satisfied, wherein Δz is a first distance, measured between a pair of adjacent seismic receivers (10,16), z is a second distance, measured from the closer (10) of the pair of adjacent seismic receivers (10,16) to the surface intercept (12) of the wellbore (4), z' is a predetermined value representing an initial depth interval based on aliasing considerations, β is a constant, and e is the exponential constant, being approximately equal to 2.718.

4. A method according to claim 3 for sending and receiving seismic signals, wherein:
β is is calculated by using linear regression to determine the slope of a plot of z, logₑA(z), where A(z) is determined by solving the equation:${\text{A(z) = 2DΔc -½(Δc)}}^{\text{2}} \text{-rΔc} \frac{\text{D-z}}{\text{2D-z}} {\text{+ DΔc log}}_{\text{e}} \frac{\text{[(2D-z)D]}}{\text{[(D-z)r + (2D-z)Δc]}} \text{+ rD} \frac{\text{D-z}}{\text{2D-z}} {\text{log}}_{\text{e}} \frac{\text{[(D-z)r]}}{\text{[(D-z)r + (2D-z)Δc]}}$ for values of z=n(z'), where z≤D, n is an integer, z' is an initial depth interval based on aliasing considerations, D is a depth to a reflector (14) being surveyed; Δc represents a CDP increment, chosen to be either z' or z'/2, r is set equal to r', and r' is an initial surface offset interval based on aliasing considerations.

5. A method according to claim 4, wherein:
the plurality of seismic sources (30) are positioned at a plurality of distances, r, measured from the surface intercept (12) of the wellbore (4) to a position in the wellbore of a seismic receiver (36) at or near the surface of the earth (32), and the plurality of seismic receivers (2) are positioned at a plurality of depths, z, in the wellbore, measured from the surface intercept (12) of the wellbore (4) to a position in the wellbore of a seismic receiver (10), such that the plurality of distances, r, and the plurality of depths, z, which are available for mapping a reflector (14) at depth, D, measured from the surface of the earth (32), along a perpendicular to said surface, to the reflector (14), are grouped into CDP radial offset bins according to the equation:${\text{r}}_{\text{CDP}} \text{=} \frac{\text{(D-z)r}}{\text{2D-z}}$ in which r_{CDP} (22) is a distance measured radially from an axis (24) running vertically through the wellbore (4) to a common depth point (26) on the reflector (14) being mapped, and CDP radial offset bins are sets of data that are treated as representing a common depth point (26) on the reflector (14) being mapped.

6. A method according to claim 1, wherein the seismic sources (30) are placed along or near the surface of the earth (32) with said exponentially decreasing first distance (34) between said pair of adjacent seismic source positions (36,38), and wherein the plurality of seismic signals are generated from a plurality of seismic source positions such that a distribution of CDP fold recorded by the system is substantially equalized across the reflector (14) surveyed.

7. A method according to claim 6, wherein:
the plurality of seismic sources (30) are positioned such that equation:${\text{Δr = (e}}^{\text{-αr}} \text{) (r')}$ is satisfied, wherein Δr is the first distance, measured between a pair of adjacent seismic source positions (36,38), r is the second distance, measured from the closer (36) of the pair of adjacent seismic source positions (36,38) to the surface intercept (24) of the wellbore (4), r' is a predetermined value representing an initial spacing interval based on aliasing considerations, α is a constant, and e is the exponential constant approximately equal to 2.718.

8. A method according to claim 7, wherein:
α is calculated by using linear regression to determine the slope of a plot of r, logₑA(r), where A(r) is determined by solving the equation:${\text{A(r) = 2DΔc -½(Δc)}}^{\text{2}} \text{-rΔc} \frac{\text{D-z}}{\text{2D-z}} {\text{+ DΔc log}}_{\text{e}} \frac{\text{[D(2D-z)]}}{\text{[r(D-z) + Δc(2D-z)]}} \text{+ rD} \frac{\text{D-z}}{\text{2D-z}} {\text{log}}_{\text{e}} \frac{\text{[(D-z)r]}}{\text{[(D-z)r + Δc(2D-z)]}}$ for values of r=n(r'), where r<2D, n is an integer, r' is the initial surface offset interval based on aliasing considerations, Z is set equal to zero, D is a depth to a reflector (14) being surveyed; and Δc represents a CDP increment, chosen to be either r' or r'/2.

9. A method according to claim 8, wherein:
the plurality of seismic receivers (2) are positioned at a plurality of depths, z, in the wellbore (4), measured from the surface intercept (12) of the wellbore (4) to a position in the wellbore of a seismic receiver (10), and the plurality of seismic sources (30) are positioned at a plurality of distances, r, measured from the surface intercept (12) of the wellbore (4) to a position, at or near the surface of the earth (32), of a seismic source (36), such that the plurality of depths, z, and the plurality of distances, r, which are available for mapping a reflector (14) at depth, D, measured from the surface of the earth (32), along a perpendicular to said surface, to the reflector (14), are grouped into CDP radial offset bins according to the equation:${\text{r}}_{\text{CDP}} \text{=} \frac{\text{(D-z)r}}{\text{2D-z}}$ in which r_{CDP} (22) is a distance measured radially from an axis (24) running vertically through the wellbore (4) to a common depth point (26) on the reflector (14) being mapped, and CDP radial offset bins are sets of data that are treated as representing a common depth point (26) on the reflector (14) being mapped.

## Patentansprüche

1. Verfahren zur Erstellung eines vertikalen seismischen Profils einer Erdformation mit einer Mehrzahl von seismischen Reflektoren, bei welchen eine Mehrzahl seismischer Signale in die Erdformation in Richtung auf die Reflektoren (14, 114) von einer Mehrzahl von seismischen Quellen (30, 130) abgesandt wird und wobei die Mehrzahl der seismischen Signale durch die Reflektoren (14, 114) reflektiert wird und eine Mehrzahl reflektierter seismischer Signale bildet, die von einer Mehrzahl seismischer Empfänger (2, 102) aufgenommen und aufgezeichnet werden, wobei die Empfänger entlang oder in der Nähe der Oberfläche der Erde (32, 132) positioniert werden, während die seismischen Quellen in einer Bohrung (4, 104) positioniert werden oder umgekehrt und wobei jede Mehrzahl von Quellen, Signalen und Empfängern gleich oder unterschiedlich sein kann,
**dadurch gekennzeichnet**, daß die Quellen und/oder Empfänger derart positioniert sind, daß ein erster Abstand (134, 34) zwischen einem Paar von benachbarten seismischen Empfängern (136, 138) oder Quellen (36, 38), die entlang oder in der Nähe der Oberfläche der Erde (132, 32) positioniert sind, exponentiell abnimmt, während ein zweiter Abstand (120, 20) von dem näheren (136, 36) des Paares benachbarter seismischer Empfänger (136, 138) oder Quellen (36, 38) zum Oberflächendurchbruch (112, 12) der Bohrung (104, 4) ansteigt und/oder daß ein erster Abstand (106, 6) zwischen einem Paar benachbarter Quellen (110, 116) oder Empfängern (10, 16), die sich in der Bohrung (104, 4) befinden, exponentiell ansteigt, während ein zweiter Abstand (108, 8) von dem näheren (110, 10) des Paares benachbarter seismischer Quellen (110) oder Empfänger (10) zum Oberflächendurchbruch (112, 12) der Bohrung ansteigt.

2. Verfahren nach Anspruch 1, wobei:
die seismischen Quellen (30) entlang oder in der Nähe der Oberfläche der Erde (32) positioniert sind und jedes Paar benachbarter seismischer Empfänger (36, 38) den exponentiell ansteigenden ersten Abstand zwischen sich aufweist und wobei die Mehrzahl reflektierter seismischer Signale an einer Mehrzahl seismischer Empfängerpositionen derart aufgenommen wird, daß eine Verteilung von CDP*(CDP = Common Depth Point = gemeinsamer Tiefpunkt)-fach, aufgezeichnet durch das System, im wesentlichen über den überwachten Reflektor (14) ausgeglichen wird.

3. Verfahren nach Anspruch 2, dadurch gekennzeichnet, daß die Mehrzahl der seismischen Empfänger (2) derart positioniert ist, daß die folgende Gleichung erfüllt wird:${\text{Δz = (e}}^{\text{βz}} \text{) (z'),}$ wobei Δz ein erster Abstand ist, gemessen zwischen einem Paar benachbarter seismischer Empfänger (10, 16), z ein zweiter Abstand ist, gemessen von dem näheren (10) des Paares benachbarter seismischer Empfänger (10, 16) zum Oberflächendurchbruch (12) der Bohrung (4), z' ein vorbestimmter Wert ist, der ein Ausgangstiefenintervall repräsentiert, basierend auf angenommenen Betrachtungen, β eine Konstante ist und e die Exponentialkonstante darstellt, die angenähert 2,718 ist.

4. Verfahren nach Anspruch 3 zum Absenden und Empfangen seismischer Signale, wobei:
β berechnet wird durch Einsatz linearer Regression zur Bestimmung der Steigung eines Punktes von z, logₑA(z), wobei A(z) bestimmt wird durch die Lösung der folgenden Gleichung:${\text{A(z) = 2DΔc -½(Δc)}}^{\text{2}} \text{-rΔc} \frac{\text{D-z}}{\text{2D-z}} {\text{+ DΔc log}}_{\text{e}} \frac{\text{[(2D-z)D]}}{\text{[(D-z)r + (2D-z)Δc]}} \text{+ rD} \frac{\text{D-z}}{\text{2D-z}} {\text{log}}_{\text{e}} \frac{\text{[(D-z)r]}}{\text{[(D-z)r + (2D-z)Δc]}}$ für Werte von z=n(z'), wobei z≤D ist, n eine ganze Zahl ist, z' ein Ausgangstiefenintervall ist, basierend auf angenommenen Betrachtungen, D eine Tiefe zu einem überwachten Reflektor (14) ist, Δc einen CDP-Anstieg repräsentiert, ausgewählt aus entweder z' oder z'/2, r gleich r' gesetzt wird und r' ein Ausgangsoberflächenversetzintervall ist, basierend auf angenommenen Betrachtungen.

5. Verfahren nach Anspruch 4, wobei:
die Mehrzahl der seismischen Quellen (30) in einer Mehrzahl von Abständen r positioniert ist, gemessen von dem Oberflächendurchbruch (12) der Bohrung (4) bis zu einer Position in dem Bohrloch eines seismischen Empfängers (36) an oder in der Nähe der Oberfläche der Erde (32), und die Mehrzahl seismischer Empfänger (2) in einer Mehrzahl von Tiefen z positioniert ist innerhalb des Bohrloches, gemessen von dem Oberflächendurchbruch (12) des Bohrloches (4) bis zu einer Position in dem Bohrloch eines seismischen Empfängers (10) derart, daß die Mehrzahl der Abstände r und die Mehrzahl der Tiefen z, die verfügbar sind für das Aufzeichnen eines Reflektors (14), bei der Tiefe D, gemessen von der Oberfläche der Erde (32) entlang einer Senkrechten zu dieser Oberfläche bis zum Reflektor (14) gruppiert sind in CDP-Radialversetzstellen entsprechend der Gleichung:${\text{r}}_{\text{CDP}} \text{=} \frac{\text{(D-z)r}}{\text{2D-z}}$ wobei r_{CDP} (22) ein Abstand ist, gemessen radial von einer Achse (24), die vertikal durch das Bohrloch (4) zu einem gemeinsamen Tiefenpunkt (26) an dem aufgezeichneten Reflektor (14) läuft und CDP-Radialversatzstellen Gruppen von Daten sind, die behandelt werden, als repräsentierten sie einen gemeinsamen Tiefenpunkt (26) an dem aufgezeichneten Reflektor (14).

6. Verfahren nach Anspruch 1, bei welchem die seismischen Quellen (30) entlang oder in der Nähe der Oberfläche der Erde (32) positioniert werden mit dem exponentiell abnehmenden ersten Abstand (34) zwischen dem Paar benachbarter seismischer Quellenpositionen (36, 38) und wobei die Mehrzahl der seismischen Signale erzeugt wird von einer Mehrzahl seismischer Quellenpositionen derart, daß eine Verteilung von CDP-fach, aufgezeichnet durch das System, im wesentlichen über den überwachten Reflektor (14) ausgeglichen wird.

7. Verfahren nach Anspruch 6, wobei:
die Mehrzahl von seismischen Quellen (30) derart positioniert ist, daß die Gleichung:${\text{Δr = (e}}^{\text{-αr}} \text{) (r')}$ erfüllt wird, wobei Δr der erste Abstand ist, gemessen zwischen einem Paar benachbarter seismischer Quellenpositionen (36, 38), r der zweite Abstand ist, gemessen von der näheren (36) des Paares von benachbarten seismischen Quellenpositionen (36, 38) zum Oberflächendurchbruch (24) des Bohrlochs (4), r' ein vorbestimmter Wert ist, der ein Ausgangsabstandsintervall repräsentiert, basierend auf angenommenen Betrachtungen, a eine Konstante ist und e die Exponentialkonstante darstellt, deren Wert angenähert 2,718 ist.

8. Verfahren nach Anspruch 7, wobei :
α berechnet wird durch Einsatz linearer Regression zur Bestimmung der Steigung eines Punktes r, logₑA(r), wobei A(r) bestimmt wird durch die Lösung der folgenden Gleichung:${\text{A(r) = 2DΔc -½(Δc)}}^{\text{2}} \text{-rΔc} \frac{\text{D-z}}{\text{2D-z}} {\text{+ DΔc log}}_{\text{e}} \frac{\text{[D(2D-z)]}}{\text{[r(D-z) + Δc(2D-z)]}} \text{+ rD} \frac{\text{D-z}}{\text{2D-z}} {\text{log}}_{\text{e}} \frac{\text{[(D-z)r]}}{\text{[(D-z)r + Δc(2D-z)]}}$ für Werte von r=n(r'), wobei r≤2D, n eine ganze Zahl ist, r' das Ausgangsoberflächenversetzintervall ist, basierend auf angenommenen Betrachtungen, Z gleich Null gesetzt wird, D eine Tiefe zum überwachten Reflektor (14) darstellt und Δc einen CDP-Anstieg repräsentiert, der ausgewählt ist aus entweder r' oder r'/2.

9. Verfahren nach Anspruch 8, wobei:
die Mehrzahl der seismischen Empfänger (2) in einer Mehrzahl von Tiefen z in dem Bohrloch (4) positioniert ist, gemessen von dem Oberflächendurchbruch (12) des Bohrloches (4) bis zu einer Position in dem Bohrloch eines seismischen Empfängers (10) und die Mehrzahl seismischer Quellen (30) positioniert ist in einer Mehrzahl von Abständen r, gemessen von dem Oberflächendurchbruch (12) des Bohrlochs (4) bis zu einer Position bei oder in der Nähe der Oberfläche der Erde (32) einer seismischen Quelle (36) derart, daß die Mehrzahl von Tiefen z und die Mehrzahl von Abständen r, die verfügbar sind zum Aufzeichnen eines Reflektors (14) bei der Tiefe D, gemessen von der Oberfläche der Erde (32), entlang einer Senkrechten zu dieser Oberfläche bis zum Reflektor (14) gruppiert sind in CDP-Radialversetzstellen entsprechend der Gleichung:${\text{r}}_{\text{CDP}} \text{=} \frac{\text{(D-z)r}}{\text{2D-z}}$ wobei r_{CDP} (22) ein Abstand ist, gemessen radial von einer Achse (24), die vertikal durch das Bohrloch (4) verläuft bis zu einem gemeinsamen Tiefenpunkt (26) an dem aufgezeichneten Reflektor (14) und CDP-Radialversetzstellen Gruppen von Daten sind, die behandelt werden, als repräsentierten sie einen gemeinsamen Tiefenpunkt (26) an dem aufgezeichneten Reflektor (14).

## Revendications

1. Procédé de détermination d'un profil sismique vertical d'une formation terrestre comportant un ensemble de réflecteurs sismiques, dans lequel un ensemble de signaux sismiques sont émis dans la formation terrestre vers les réflecteurs (14:114) par un ensemble de sources (30:130) sismiques, et dans lequel ledit ensemble de signaux sismiques est réfléchi par lesdits réflecteurs (14:114) pour former un ensemble de signaux sismiques réfléchis qui sont reçus par un ensemble de réflecteurs (2:102) sismiques et enregistrés, lesdits récepteurs étant positionnés le long ou à proximité de la surface de la terre (32:132), tandis que lesdites sources sismiques sont positionnées dans un puits (4:104), ou inversement, et dans lequel chaque ensemble de sources, de signaux et de récepteurs, peuvent être identiques ou différents;
le procédé étant caractérisé en ce que lesdites sources et/ou lesdits récepteurs sont positionnés de façon qu'une première distance (134:34) entre une paire de récepteurs (136:138) ou de sources (36:38) sismiques positionnés le long ou à proximité de la surface de la terre (132:32) décroît exponentiellement lorsqu'une seconde distance (120:20) entre le plus proche (136:36) de la paire de récepteurs (136:138) ou de sources (36:38) sismiques adjacents et le point (112:12) de surface du puits (104:4), augmente, et/ou de façon qu'une première distance (106:6) entre une paire de sources (110:116) ou de récepteurs (10:16) adjacents, positionnés dans le puits (104:4), augmente exponentiellement lorsqu'une seconde distance (108:8) entre la plus proche (110:10) de la paire de sources (110) ou de récepteurs (10) sismiques adjacents et le point (112:12) de surface du puits, augmente.

2. Procédé selon la revendication 1, dans lequel les sources (30) sismiques sont positionnées le long ou à proximité de la surface de la terre (32) et dans lequel chaque paire de récepteurs (36, 38) sismiques adjacents présente ladite première distance croissant exponentiellement entre ces derniers, et dans laquelle l'ensemble de signaux sismiques réfléchis est reçu en un ensemble de positions de récepteurs sismiques de façon qu'une distribution de plis de points de couverture multiple enregistrée par le système soit sensiblement égalisée de part et d'autre d'un réflecteur (14) analysé.

3. Procédé selon la revendication 2, dans lequel:
l'ensemble de récepteurs (2) sismiques est positionné de façon que l'équation:${\text{Δz = (e}}^{\text{βz}} \text{) (z')}$ soit satisfaite, où Δz est une première distance, mesurée entre une paire de récepteurs (10,16) sismiques adjacents, z est une seconde distance, mesurée entre le plus proche (10) de la paire de récepteurs (10,16) sismiques adjacents, et le point (12) de surface du puits (4), z' est une valeur prédéterminée représentant un intervalle de profondeur initial déterminé sur la base de considérations de repliement spectral, β est une constante, et e est la constante exponentielle, qui est approximativement égale à 2,718.

4. Procédé selon la revendication 3, pour émettre et recevoir des signaux sismiques, dans lequel: β est calculé par utilisation d'une régression linéaire afin de déterminer la pente d'un graphique de z, logₑ(A(z), où A(z) est déterminé par résolution de l'équation:${\text{A(z) = 2DΔc -1/2(Δc)}}^{\text{2}} \text{-rΔc} \frac{\text{D - z}}{\text{2D - z}} {\text{Δc log}}_{\text{e}} \frac{\text{[(2} \text{D} \text{-} \text{z} \text{)} \text{D} \text{]}}{\text{[(} \text{D} \text{-} \text{z} \text{)} \text{r} \text{+(2} \text{D} \text{-} \text{z} \text{)Δ} \text{c} \text{]}} \text{+} \text{rD} \frac{\text{D-z}}{\text{2} \text{D-z}} {\text{log}}_{\text{e}} \frac{\text{[(} \text{D-z} \text{)} \text{r} \text{]}}{\text{[(} \text{D-z} \text{)} \text{r} \text{+ (2} \text{D-z} \text{)Δ} \text{c} \text{]}}$ afin d'en extraire les valeurs de z=n(z'), où z ≤ D, n est un entier, z' est un intervalle de profondeur initial, déterminé sur la base de considérations de repliement spectral, D est la profondeur d'un réflecteur (14) analysé; Δc représente un accroissement de couverture multiple, fixé soit à z', soit à z'/2, r est fixé à r', et r' est un intervalle de décalage de surface initial déterminé sur la base de considérations de repliement spectral.

5. Procédé selon la revendication 4, dans lequel:
l'ensemble de sources (30) sismiques est positionné en un ensemble de distances r, mesuré entre le point (12) de surface du puits (4), et une position dans le puits d'un récepteur (36) sismique situé à, ou à proximité de la surface de la terre (32), et l'ensemble de récepteurs (2) sismiques est positionné en un ensemble de profondeurs (z) dans le puits, qui sont mesurées entre le point (12) de surface du puits (4) et une position dans le puits d'un récepteur (10) sismique, de telle façon que l'ensemble de distances r, et que l'ensemble de profondeurs z, qui sont disponibles pour repérer un réflecteur (14) à la profondeur D, mesurée entre la surface de la terre (32), le long d'une perpendiculaire à ladite surface, et le réflecteur (14), soient regroupées dans des classes de décalage radial de couverture multiple, conformément à l'équation:${\text{r}}_{\text{CDP}} \text{=} \frac{\text{(D - z)r}}{\text{2D - z}}$ dans laquelle r_{CDP} (22) est une distance mesurée radialement entre un axe (24) parcourant verticalement le puits (4) et un point (26) de couverture multiple sur le réflecteur (14) cartographié, et les classes de décalage radial de couverture multiple sont des ensembles de données qui sont traitées comme si elles représentaient un point (26) de couverture multiple sur le réflecteur (14) cartographié.

6. Procédé selon la revendication 1, dans lequel les sources (30) sismiques sont placées le long ou à proximité de la surface de la terre (32), ladite première distance (34) décroissant exponentiellement étant prise entre ladite paire de positions (36,38) de sources sismiques adjacentes, et dans lequel l'ensemble de signaux sismiques est produit à partir d'un ensemble de positions de sources sismiques de telle façon qu'une distribution de plis de points de couverture multiple enregistrés par le système soit sensiblement égalisée de part et d'autre du réflecteur (14) analysé.

7. Procédé selon la revendication 6, dans laquelle:
l'ensemble de sources (30) sismiques est positionné de façon que l'équation:${\text{Δr= (e}}^{\text{-αr}} \text{) (r')}$ soit satisfaite, Δr étant la première distance, mesurée entre une paire de positions (36,38) de sources sismiques adjacentes, r est la seconde distance, mesurée entre la plus proche (36) de la paire de positions (36,38) de sources sismiques adjacentes et le point (24) de surface du puits (4), r' est une valeur prédéterminée représentant un intervalle d'espacement initial déterminé sur la base de considérations de repliement spectral, α est une constante, et e est la constante exponentielle approximativement égale à 2,718.

8. Procédé selon la revendication 7, dans lequel:
α est calculé par utilisation d'une régression linéaire pour déterminer la pente d'un graphe r, logₑ(A(r)), où A(r) est déterminé par résolution de l'équation:${\text{A(r) = 2DΔc -½(Δc)}}^{\text{2}} \text{-rΔc} \frac{\text{D-z}}{\text{2D-z}} {\text{+ DΔc log}}_{\text{e}} \frac{\text{[D(2D - z)]}}{\text{[r(D - z)r + Δc(2D - z)]}} \text{+ rD} \frac{\text{D - z}}{\text{2D - z}} {\text{log}}_{\text{e}} \frac{\text{[(D - z)r]}}{\text{[(D - z)r + Δc(2D - z)}}$ pour déterminer les valeurs de r=n(r'), où r ≤ 2D, n est un entier, r' est l'intervalle de décalage de surface initial déterminé sur la base de considérations de repliement spectral, Z est fixé à zéro, D est la profondeur d'un réflecteur (14) analysé; et Ac représente un accroissement de couverture multiple, choisi pour être égal soit à r', soit à r'/2.

9. Procédé selon la revendication 8, dans laquelle:
l'ensemble de récepteurs (2) sismiques est positionné en un ensemble de profondeurs z dans le puits (4), mesurées entre le point (12) de surface du puits (4), et la position dans le puits d'un récepteur (10) sismique, et l'ensemble de sources (30) sismiques est positionné en un ensemble de distances r, mesurées entre le point (12) de surface du puits (4), et une position située à, ou à proximité de la surface de la terre (32), d'une source (36) sismique, de telle façon que l'ensemble de profondeurs z et que l'ensemble de distances r qui sont disponibles pour cartographier un réflecteur (14) à la profondeur D, mesurée entre la surface de la terre (32), le long d'une perpendiculaire à ladite surface, et le réflecteur (14), soient regroupées en classes de décalage radial de couverture multiple, conformément à l'équation:${\text{r}}_{\text{CDP}} \text{=} \frac{\text{(D - z)r}}{\text{2D - z}}$ dans laquelle r_{CDP} (22) est une distance mesurée radialement entre un axe (24) parcourant verticalement le puits (4) et un point (26) de couverture multiple sur le réflecteur (14) cartographié, et les classes de décalage radial de couverture multiple sont des ensembles de données qui sont considérées comme représentant un point (26) de couverture multiple sur le réflecteur (14) cartographié.
